# EUROPEAN PATENT APPLICATION

(11) **EP 4 335 569 A1**
(43) Date of publication of application: **13.03.2024**
(21) Application number: 23195519.6
(22) Date of filing: 05.09.2023
(51) Int. Cl.: B22F 10/25, B22F 10/64, B23K 1/00, B23K 1/20, B23K 35/02, B23P 6/04, B33Y 10/00, B33Y 40/10, B33Y 40/20, F01D 5/00

(54) **ADDITIVELY DEPOSITING BRAZE MATERIAL**

(30) Priority: 09.09.2022 US 202217942008
(71) Applicant: PRATT & WHITNEY CANADA CORP., Longueuil, Québec J4G 1A1 (CA)
(72) Inventor: DAULTON, Charles Trent, (01BE5) Longueuil, Québec J4G 1A1 (CA); TRACY, Kevin M., (01BE5) Longueuil, Québec J4G 1A1 (CA)
(74) Representative: Dehns

(57) **Abstract**

A method is disclosed during which a substrate (37) is provided. Braze powder (36) is deposited with the substrate (37) using an additive manufacturing device (22). The braze powder (36) is sintered together and to the substrate (37) during the depositing of the braze powder (36) to provide the substrate (37) with sintered braze material (58). The substrate (37) and the sintered braze material (58) are heated to melt the sintered braze material (58) and diffusion bond the sintered braze material (58) to the substrate (37).

## Description

### TECHNICAL FIELD

This disclosure relates generally to manufacturing a component using additive manufacturing.

### BACKGROUND INFORMATION

Defects in a component may be repaired using braze filler material or weld filler. Various processes are known in the art for applying braze filler material and for welding filler material to a component. While these known processes have various advantages, there is still room in the art for improvement. In particular, there is a need in the art for repair processes which can reduce material waste and/or decrease formation of secondary (process related) defects in a substrate of the component.

### SUMMARY

According to an aspect of the present disclosure, a method is disclosed during which a substrate is provided. Braze powder is deposited with the substrate using an additive manufacturing device. The braze powder is sintered together and to the substrate during the depositing of the braze powder to provide the substrate with sintered braze material. The substrate and the sintered braze material are heated to melt the sintered braze material and diffusion bond the sintered braze material to the substrate.

According to another aspect of the present disclosure, another method is disclosed during which a substrate is provided. The substrate is configured from or otherwise includes metal. Braze powder is directed to the substrate through a nozzle. The braze powder is sintered to the substrate using an energy beam to provide sintered braze material. The substrate and the sintered braze material are subjected to a heat cycle to melt the sintered braze material and diffusion bond the sintered braze material to the substrate.

According to still another aspect of the present disclosure, another method is disclosed during which a substrate is provided. Braze powder is sintered to the substrate using an additive manufacturing device to provide the substrate with sintered brazed material. Subsequent to the sintering of the braze powder, the substrate and the sintered braze material are subjected to a heat cycle to melt the sintered braze material and diffusion bond the sintered braze material to the substrate.

The energy beam may sinter the braze powder to the substrate as the braze powder is being deposited onto the substrate by the nozzle.

The directing of the braze powder and the sintering of the braze powder may be performed using an additive manufacturing device.

The braze powder may include a metal alloy powder and a braze material powder with a lower melting point than the metal alloy.

The depositing of the braze powder may include: directing the braze powder towards the substrate through a nozzle; and sintering the braze powder using a laser beam.

The laser beam may be incident with the braze powder being directed towards the substrate.

The directing of the braze powder and the sintering of the braze powder may be performed concurrently.

The laser beam may be directed towards the substrate through an inner bore of the nozzle.

At least some of the sintered braze material may be deposited within a void in the substrate.

At least some of the sintered braze material may form a cladding over a surface of the substrate.

The heating of the substrate and the sintered braze material may be performed in a vacuum furnace subsequent to the depositing of the braze powder.

The braze powder may include metal alloy powder and braze material powder with a lower melting point than the metal alloy powder.

The metal alloy powder and the substrate may be or include a common metal alloy.

The braze powder may be deposited with the substrate to repair a crack in a component comprising the substrate.

The braze powder may be deposited with the substrate to restore a dimensional parameter of a component that includes the substrate.

The method may also include removing a coating from the substrate to expose a surface of the substrate. The braze powder may be sintered to the surface of the substrate.

A damaged component may include the substrate. The braze powder may be deposited with the substrate to repair the damaged component.

The substrate may be part of a stationary component of a gas turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for manufacturing a component.
FIG. 2 is a schematic illustration of an additive manufacturing device.
FIG. 3 is a flow diagram of a method for manufacturing the component.
FIGS. 4-8 are partial sectional illustrations of the component during various steps of the manufacturing method.

### DETAILED DESCRIPTION

The present disclosure includes systems and methods for manufacturing a component. Herein, the term "manufacturing" may describe a process for forming the component; e.g., creating a brand new component. The term "manufacturing" may also or alternatively describe a process for repairing the component; e.g., restoring one or more features of a previously formed component to brand new condition, similar to brand new condition or better than brand new condition. The component, for example, may be repaired to fix one or more defects (e.g., cracks, wear and/or other damage) imparted during previous use of the component. The component may also or alternatively be repaired to fix one or more defects imparted during the initial formation of the component. For ease of description, however, the manufacturing systems and methods may be described below with respect to repairing the component.

The component may be any stationary component within a hot section of the gas turbine engine; e.g., a combustor section, a turbine section or an exhaust section. Examples of the stationary component include, but are not limited to, a vane, a platform, a gas path wall, a liner and a shroud. The present disclosure, however, is not limited to stationary component applications. The engine component, for example, may alternatively be a rotor blade; e.g., a turbine blade. The present disclosure is also not limited to hot section engine components. For ease of description, however, the manufacturing systems and methods may be described below with respect to repairing a gas turbine engine component such as a turbine vane or other stators within the turbine section.

The component may be included in various gas turbine engines. The component, for example, may be included in a geared gas turbine engine where a gear train connects one or more shafts to one or more rotors in a fan section, a compressor section and/or any other engine section. Alternatively, the component may be included in a direct-drive gas turbine engine configured without a gear train. The component may be included in a gas turbine engine configured with a single spool, with two spools, or with more than two spools. The gas turbine engine may be configured as a turbofan engine, a turbojet engine, a turboprop engine, a turboshaft engine, a propfan engine, a pusher fan engine or any other type of gas turbine engine. The gas turbine engine may alternatively be configured as an auxiliary power unit (APU) or an industrial gas turbine engine. The present disclosure therefore is not limited to any particular types or configurations of gas turbine engines. Furthermore, it is contemplated the manufacturing systems and methods of the present disclosure may alternatively be used to manufacture component(s) for non-gas turbine engine applications; e.g., for reciprocating piston internal combustion engine applications, for rotary internal combustion engine applications, etc.

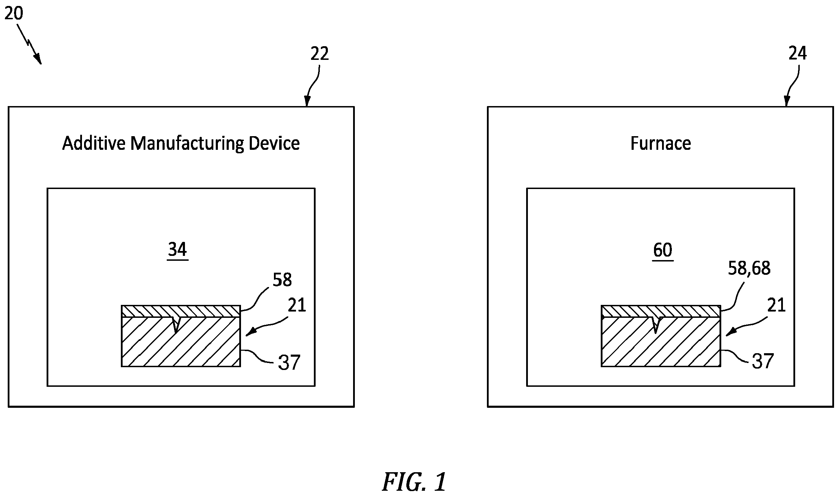

FIG. 1 schematically illustrates an exemplary system 20 for manufacturing (e.g., repairing or forming) the component 21. This manufacturing system 20 includes an additive manufacturing device 22 (e.g., a three-dimensional (3D) printer) and a furnace 24.

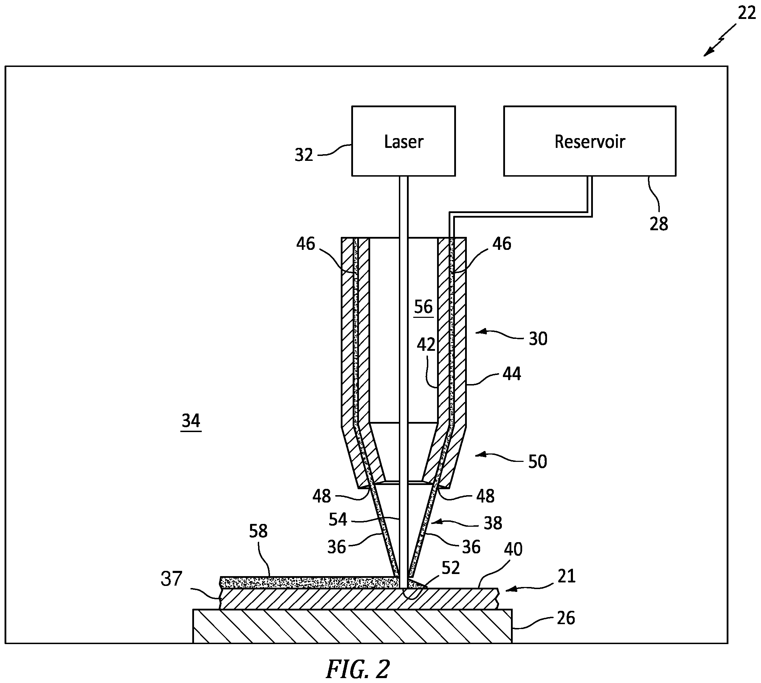

Referring to FIG. 2, the additive manufacturing device 22 may be configured as a laser material deposition device. More particularly, the additive manufacturing device 22 may be configured as a direct laser braze cladding (DLBC) device. The additive manufacturing device 22 of FIG. 2, for example, includes a component support 26, a material reservoir 28, a nozzle 30 and a laser 32.

The component support 26 is located within an internal build chamber 34 of the additive manufacturing device 22. This component support 26 is configured to support the component 21 within the build chamber 34. The component 21, for example, may be placed on top of the component support 26. The component 21 may also or alternatively be mounted to the component support 26 via a fixture, which fixture may arrange the component 21 in a fixed position and/or in a known spatial orientation within the build chamber 34.

The material reservoir 28 is configured to store a quantity of braze powder 36 formed from braze material; e.g., braze material powder and metal alloy powder. This material reservoir 28 is also configured to supply the braze powder 36 to the nozzle 30 during additive manufacturing device operation. Examples of the material reservoir 28 include, but are not limited to, a tank, a hopper and a bin.

The nozzle 30 is configured to deliver the braze powder 36 received from the material reservoir 28 to a substrate 37 of the component 21 during additive manufacturing device operation. More particularly, the nozzle 30 is configured to direct a (e.g., annular, conical) stream 38 of the braze powder 36 toward (e.g., to) a surface 40 of the substrate 37. The nozzle 30 of FIG. 2, for example, includes a tubular inner sidewall 42 and a tubular outer sidewall 44. The outer sidewall 44 extends axially along and circumscribes the inner sidewall 42 so as to form a passage 46 (e.g., an annulus) between the inner sidewall 42 and the outer sidewall 44. This passage 46 is fluidly coupled with an outlet from the material reservoir 28, and the passage 46 extends axially within the nozzle 30 to a (e.g., annular) nozzle orifice 48. A distal end portion 50 of the nozzle 30 and its inner sidewall 42 and its outer sidewall 44 may radially taper inwards as the nozzle 30 extends axially toward (e.g., to) the nozzle orifice 48. With such an arrangement, the nozzle 30 may focus the braze powder 36 to, around or about a target point 52 on, slightly above or slightly below the substrate surface 40. However, in alternative embodiments, the nozzle 30 may be configured to deliver the braze powder 36 through an internal bore rather than an annulus.

The laser 32 is configured to generate a laser beam 54 for sintering the braze powder 36 delivered by the nozzle 30 together and to the substrate 37. Herein, the term "sintering" may describe a process for coalescing powder particles together into a (e.g., porous) mass by heating without (e.g., partial or complete) liquification of the powder. This is in contrast to, for example, a powder laser welding process where powder is melted to a liquid state (e.g., in a melt pool) by a laser beam and then solidified as a solid mass. The laser 32 of FIG. 2 is configured to direct the laser beam 54 to or about the target point 52, where the laser beam 54 may be incident with and is operable to heat up the braze powder 36 for sintering. The laser beam 54 of FIG. 2 is directed through an (e.g., central) internal bore 56 of the nozzle 30, which internal nozzle bore 56 may be formed by the inner sidewall 42. However, in other embodiments, the laser 32 may be configured to direct the laser beam 54 outside of the nozzle 30 or along another path through the nozzle 30.

Referring to FIG. 1, the furnace 24 is configured to receive the substrate 37 with the sintered braze material 58 within an internal treatment chamber 60 of the furnace 24. The furnace 24 is further configured to subject the substrate 37 and the sintered braze material 58 to a heat cycle, for example under vacuum and/or in a partial pressure inert gas (e.g., argon (Ar) gas) environment. During this heat cycle, the sintered braze material 58 may melt and diffusion bond to the substrate 37. An example of the furnace 24 is a vacuum furnace.

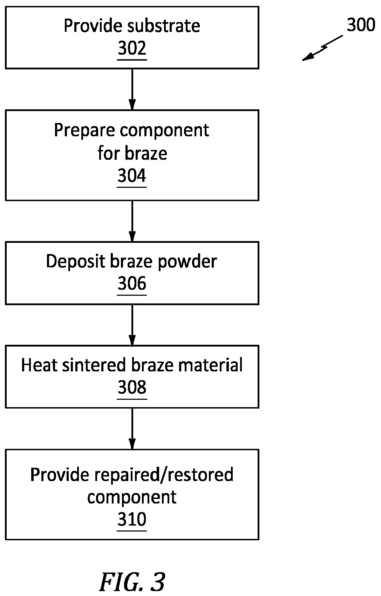

FIG. 3 is a flow diagram of an exemplary method 300 for manufacturing (e.g., repairing or forming) the component 21. For ease of description, the manufacturing method 300 is described with respect to the manufacturing system 20. The manufacturing method 300, however, is not limited to any particular manufacturing types or configurations. Furthermore, some or all of the method steps may alternatively be performed to form a new component.

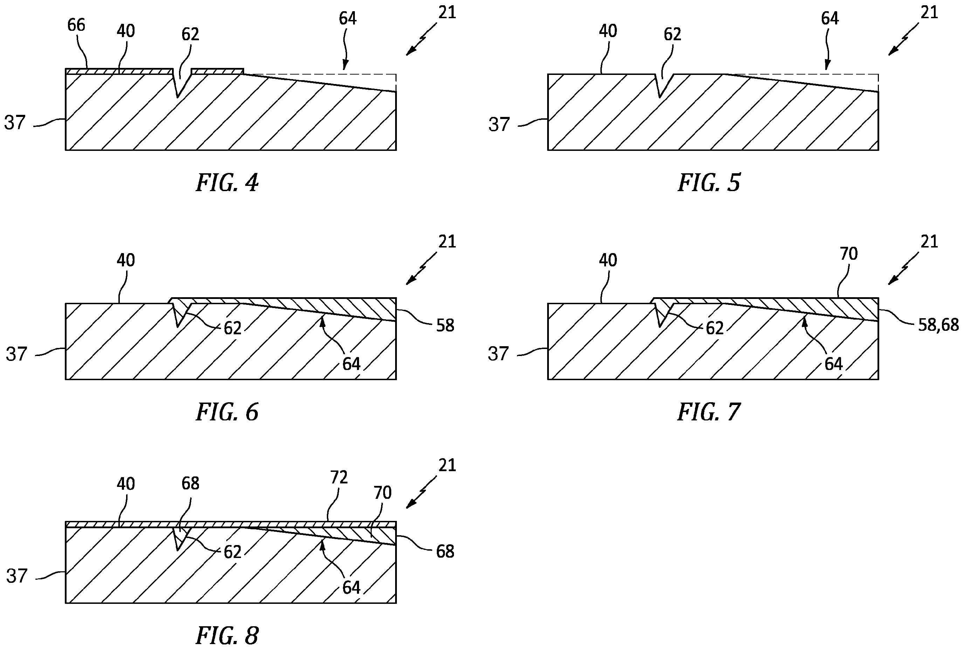

In step 302, referring to FIG. 4, the substrate 37 is provided. For ease of description, this substrate 37 is described as part of a damaged component. For example, the component 21 of FIG. 4 includes at least one void 62 such as, but not limited to, a crack, a fracture, a slice, a gouge, a dimple, etc. This void 62 projects partially into the component 21 and its substrate 37 from an exterior of the component 21. The component 21 of FIG. 4 also include a wear region 64 where a portion of the component 21 and its substrate 37 has been worn away due to, for example, erosion, rubbing and/or otherwise. Of course, in other embodiments, the component 21 may include multiple voids 62, multiple wear regions 64, the void(s) 62 without any wear region, the wear region(s) 64 without any void, and/or one or more other substrate defects.

In step 304, referring to FIG. 5, the component 21 is prepared for the braze powder; e.g., brazing. A coating 66 (see FIG. 4) over at least a portion or an entirety of the substrate 37, for example, may be removed to expose the underlying substrate 37 and its substrate surface 40. The coating 66 may be removed using various techniques such as, but not limited to, chemical stripping, abrasive blasting, waterjet blasting and/or machining. The substrate surface 40 may also be prepared (e.g., treated) for braze powder deposition. Examples of such surface preparation may include, but are not limited to: fluoride ion cleaning (FIC); reverse electroplating, electroplating to introduce a more wettable interface, such as nickel (Ni); nickel honing (e.g., nicroblasting); acid etching; and/or wet abrasive honing. Fluoride ion cleaning (FIC) may be particularly useful for removing oxides from deep within tips of narrow cracks, which may facilitate subsequent deep penetration of braze into the cracks for (e.g., complete) healing of the cracks.

In step 306, referring to FIG. 6, the braze powder is deposited with the substrate 37 using the additive manufacturing device 22. The additive manufacturing device 22 of FIG. 2, for example, may dispose the braze powder 36 onto the substrate surface 40 at or about the target point 52. The laser 32 may concurrently sinter this braze powder 36 at the target point 52 together and/or to the underlying substrate 37. Referring to FIG. 6, the additive manufacturing device 22 may be positioned and operated to provide the sintered braze material 58 within the void 62; e.g., to partially or completely or over fill the void 62. The additive manufacturing device 22 may also or alternatively be positioned and operated to provide a cladding (e.g., a layer or multiple layers) of the sintered braze material 58 over the wear region 64; e.g., to build back worn away substrate material. The additive manufacturing device 22 may selectively deposit the braze powder over the substrate 37 such that (e.g., only) areas which need repair (and optionally areas adjacent and/or surrounding those areas) are filled with the sintered braze material 58 and/or coated with the sintered braze material 58. Of course, in other embodiments, the braze powder may be deposited over an entirety of the substrate 37 where excess material may later be removed. The braze powder may be deposited (e.g., built up) as one or more layers during the step 306.

The braze powder 58 may include a mixture of metal alloy powder (e.g., substrate powder) and braze material powder. The metal alloy powder may be selected to have a relatively high melting point and common (the same) or similar material properties as the substrate 37. The metal alloy powder, for example, may be made from a common (or a similar) material as the underlying substrate 37; e.g., an aluminum (Al) superalloy, a nickel (Ni) superalloy, a titanium (Ti) superalloy, etc. The braze material powder, on the other hand, may be selected to have a relatively low melting point, which is lower than the melting point of the metal alloy powder. The braze material powder, for example, may include a common or similar base element as the substrate 37 and/or the metal alloy powder (e.g., aluminum (Al), nickel (Ni) or titanium (Ti)) without the super alloying elements. The brazing powder may also include boron (B), silicon (Si) and/or other melting point suppressants which may help facilitate melting and diffusion of the metal alloy powder with the substrate 37. The present disclosure, however, is not limited to the foregoing exemplary braze materials.

The braze powder 58 may include various proportions of the metal alloy powder and the braze material powder. For example, the braze powder 58 may include lower proportions of the metal alloy powder relative to the braze material powder (e.g., 30/70) to fill voids within the substrate 37; e.g., to increase wettability and/or capillary penetration of the braze material. On the other hand, the braze powder 36 may include lower proportions of the braze material powder relative to the metal alloy powder (e.g., 60/40) to form a cladding over the substrate 37. Still alternatively, the braze powder 36 may include the same amount of the metal alloy powder as the braze material powder.

In step 308, referring to FIG. 7, the substrate 37 and the sintered braze material 58 are heated. The substrate 37 with the sintered braze material 58, for example, may be arranged within the treatment chamber 60 of the furnace 24 of FIG. 1. The furnace 24 may subject the substrate 37 with the sintered braze material 58 to a heat cycle. More particularly, the substrate 37 with the sintered braze material 58 may be heated to an elevated temperature within a partial pressure inert gas environment. The elevated temperature is selected such that the sintered braze material 58 melts, wets and flows into defects of the substrate 37 by capillary action. Once the sintered braze material 58 has melted, a relatively lower temperature may be selected and held in the same heat cycle for a duration. This sustained temperature may facilitate diffusion of the melting point suppressant material. This diffusion of the melting point suppressant material may facilitate athermal solidification, resulting in a braze diffusion bond of the sintered material to the substrate 37. The athermal solidification may describe solidification of the melted sintered braze material under, for example, a constant temperature. The diffusion duration may be between four (4) hours and twelve (12) hours, but may be much shorter or longer depending on materials being diffusion brazed and/or desired material properties. This elevated temperature, however, is less than a melting point temperature of the substrate material. The elevated temperature for the braze melt, for example, may be between 1,500°F (816 °C) and 2,500°F (1371 °C). The elevated temperature for the braze diffusion, for example, may be between 1,000°F (538 °C) and 2,400°F (1316 °C). The inert gas environment may have a vacuum pressure range between, for example, 0.5 microns and 0.1 microns. The present disclosure, however, is not limited to the foregoing exemplary heat cycle parameters, and the foregoing heat cycle parameters may vary depending upon the specific material composition of the substrate 37 and the braze material, dimensions (e.g., thickness) of the sintered brazed material 58, etc.

Following the heating step 308, braze filler material (BFM) 68 (e.g., the melted and diffusion bonded braze material) of FIG. 7 may heal the void 62. The braze filler material 68, for example, may partially or completely fill the void 62. The braze filler material 68 may also or alternatively provide a cladding 70 over the substrate 37 to restore a dimensional parameter of and/or reinforce the wear region 64. The braze filler material 68, for example, may buildup the wear region 64 back to or above a dimensional parameter specified therefor by a design specification or a repair specification for the component 21.

In step 310, referring to FIG. 8, the substrate 37 with the braze filler material 68 may be processed (e.g., post-braze processed) to provide a repaired / restored component. Excess braze filler material, for example, may be removed, the substrate material and/or the braze filler material may be finished (e.g., sanded, polished, etc.), and/or one or more coatings 72 (e.g., bond coating(s), environmental coating(s), thermal barrier coating(s), etc.) may be applied to the substrate 37 and/or the braze filler material 68.

In some embodiments, referring to FIG. 2, the braze powder 36 and the laser beam 54 may be concurrently directed to the common target point 52 for the braze powder deposition. In other embodiments, however, the laser beam 54 may alternatively be directed to a different target point than the braze powder 36. The laser beam target point, for example, may alternatively be spaced from and follow the braze powder target point.

In some embodiments, the braze powder 36 may be sintered using the laser beam 54. The present disclosure, however, is not limited to use of such an exemplary energy beam. The braze powder 36, for example, may alternatively be sintered using an electron beam. Furthermore, multiple energy beams (e.g., laser beams and/or electron beams) may be used for sintering the braze powder 36.

A component manufactured using a typical additive laser deposition welding process may be subject to: internal stresses thermally induced by relatively high welding temperatures (e.g., temperatures high enough to melt the substrate material); thermally induced distortion and/or warping; and/or reduction in material density caused by, for example, dendritic voids. By contrast, sintering the braze powder 36 with the substrate 37 and then diffusion bonding the braze with the substrate 37 as described above subjects the substrate 37 to relatively low processing temperatures, compared to welding temperatures. The manufacturing methods of the present disclosure may thereby reduce or eliminate: thermally induced stresses; thermally induced distortion and/or warping; and/or reduction in material density associated with additive laser deposition welding techniques. The above laser braze cladding technique may also be paired with adaptive processing to reduce material consumption and/or require less post processing (e.g., machining, finishing, etc.) compared to traditional manual brazing techniques.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method, comprising:
providing a substrate (37);
depositing braze powder (36) with the substrate (37) using an additive manufacturing device (22), the braze powder (36) sintered together and to the substrate (37) during the depositing of the braze powder (36) to provide the substrate (37) with sintered brazed material (58); and
heating the substrate (37) and the sintered braze material (58) to melt the sintered braze material (58) and diffusion bond the sintered braze material (58) to the substrate (37).

2. The method of claim 1, wherein the depositing of the braze powder (36) includes
directing the braze powder (36) towards the substrate (37) through a nozzle (30); and
sintering the braze powder (36) using a laser beam (54).

3. The method of claim 2, wherein the laser beam (54) is incident with the braze powder (36) being directed towards the substrate (37).

4. The method of claim 2 or 3, wherein the directing of the braze powder (36) and the sintering of the braze powder (36) are performed concurrently.

5. The method of any of claims 2 to 4, wherein the laser beam (54) is directed towards the substrate (37) through an inner bore (56) of the nozzle (30).

6. The method of any preceding claim, wherein at least some of the sintered braze material (58) is deposited within a void (62) in the substrate (37).

7. The method of any preceding claim, wherein at least some of the sintered braze material (58) forms a cladding (70) over a surface (40) of the substrate (37).

8. The method of any preceding claim, wherein the heating of the substrate (37) and the sintered braze material (58) is performed in a vacuum furnace (24) subsequent to the depositing of the braze powder (36).

9. The method of any preceding claim, wherein the braze powder (36) comprises metal alloy powder and braze material powder with a lower melting point than the metal alloy powder, wherein, optionally the metal alloy powder and the substrate comprise a common metal alloy.

10. The method of any preceding claim, wherein the braze powder is deposited with the substrate (37) to repair a crack in a component (21) comprising the substrate (37); and/or wherein the braze powder (36) is deposited with the substrate (37) to restore a dimensional parameter of a or the component (21) comprising the substrate (37).

11. The method of any preceding claim, further comprising removing a coating (66) from the substrate (37) to expose a surface (40) of the substrate (37), wherein the braze powder (36) is sintered to the surface (40) of the substrate (37).

12. The method of any preceding claim, wherein
a damaged component (21) comprises the substrate (37); and
the braze powder (36) is deposited with the substrate (37) to repair the damaged component (21).

13. The method of any preceding claim, wherein the substrate (37) is part of a stationary component (21) of a gas turbine engine.

14. A method, comprising:
providing a substrate (37) comprising metal;
directing braze powder (36) to the substrate (37) through a nozzle (30);
sintering the braze powder (36) to the substrate (37) using an energy beam (54) to provide sintered braze material (58); and
subjecting the substrate (37) and the sintered braze material (58) to a heat cycle to melt the sintered braze material (58) and diffusion bond the sintered braze material (58) to the substrate (37), wherein optionally, on or more of
the energy beam (54) sinters the braze powder (36) to the substrate (37) as the braze powder (36) is being deposited onto the substrate (37) by the nozzle (30);
the directing of the braze powder (36) and the sintering of the braze powder (36) is performed using an additive manufacturing device (22); and/or
the braze material (58) comprises a metal alloy powder and a braze material powder with a lower melting point than the metal alloy.

15. A method, comprising:
providing a substrate (37);
sintering braze powder (36) to the substrate (37) using an additive manufacturing device (22) to provide the substrate (37) with sintered brazed material (58); and
subsequent to the sintering of the braze powder (36), subjecting the substrate (37) and the sintered braze material (58) to a heat cycle to melt the sintered braze material (58) and diffusion bond the sintered braze material (58) to the substrate (37).
